# FASCICULE DE BREVET EUROPEEN

(11) **EP 3 870 509 B1**
(45) Date de publication et mention de la délivrance du brevet: **29.03.2023**
(21) Numéro de dépôt: 19813091.6
(22) Date de dépôt: 22.10.2019
(51) Int. Cl.: B64D 13/08

(54) **BOUCLE D'EXTRACTION D'EAU D'UN SYSTÈME DE CONDITIONNEMENT D'AIR D'UNE CABINE D'UN VÉHICULE DE TRANSPORT AÉRIEN OU FERROVIAIRE**
KREISLAUF ZUR EXTRAKTION VON WASSER AUS EINEM KLIMATISIERUNGSSYSTEM EINER KABINE EINES LUFT- ODER SCHIENENTRANSPORTFAHRZEUGS
LOOP FOR EXTRACTING WATER FROM AN AIR CONDITIONING SYSTEM OF A CABIN OF AN AIR OR RAIL TRANSPORT VEHICLE

(30) Priorité: 26.10.2018 FR 1859914
(43) Date de publication de la demande: 01.09.2021
(73) Titulaire: Liebherr-Aerospace Toulouse SAS, 31200 Toulouse (FR)
(72) Inventeur: CIAIS, Viviane, 31016 TOULOUSE Cedex 2 (FR); CARON, Arnaud, 31016 TOULOUSE Cedex 2 (FR)
(74) Mandataire: Bringer IP
(86) Numéro de dépôt international: PCT/FR2019/052517
(87) Numéro de publication internationale: WO 2020/084251

(56) Documents cités:
- EP-A1- 2 487 107
- EP-A1- 2 821 346
- EP-A2- 1 439 123
- WO-A1-99/41146
- WO-A1-2009/137472

## Description

### 1. Domaine technique de l'invention

L'invention concerne une boucle d'extraction d'eau destinée à équiper un système de conditionnement d'air ou un système de refroidissement d'air d'un véhicule de transport aérien ou ferroviaire.

### 2. Arrière-plan technologique

Un système de conditionnement ou de refroidissement d'air d'un aéronef, comprend de manière connue un dispositif de prélèvement d'air comprimé sur au moins un compresseur d'un moteur propulsif de l'aéronef et une turbomachine à cycle à air comprenant au moins un compresseur et une turbine de détente. Le compresseur de la turbomachine à cycle à air est alimenté en air par le dispositif de prélèvement d'air comprimé après passage par une vanne de régulation de débit ou de pression, et la turbine de la turbomachine comprend une sortie d'air qui alimente une chambre de mélange reliée à la cabine de manière à pouvoir alimenter la cabine en air à température et débit contrôlés. Le système comprend en outre différents échangeurs de chaleur, vannes de régulation et une boucle d'extraction d'eau.

Cette boucle d'extraction est destinée à assécher l'air avant son injection dans la turbine de la turbomachine à cycle à air pour être détendu et distribué vers une chambre de mélange reliée à la cabine de l'aéronef.

Les performances thermodynamiques d'un système de conditionnement d'air (aussi désigné par les termes de pack de conditionnement d'air) sont liées aux performances d'extraction d'eau par la boucle d'extraction d'eau. En outre, une boucle d'extraction d'eau performante permet d'augmenter la fiabilité du pack de conditionnement en évitant l'érosion de la turbine.

Une boucle d'extraction d'eau comprend en général un réchauffeur formé d'un échangeur de chaleur air/air, un condenseur également formé d'un échangeur de chaleur air/air, et d'un extracteur d'eau (aussi désigné par les termes de séparateur d'eau).

La plupart des systèmes de conditionnement d'air actuels mettent en oeuvre des séparateurs d'eau centrifuges, aussi désignés par les termes d'extracteurs d'eau à technologie vortex. Un tel séparateur d'eau est constitué d'une hélice configurée pour pouvoir mettre en rotation l'air chargé de gouttelettes d'eau et entrainer ces gouttelettes d'eau par centrifugation vers les parois latérales du séparateur, ellesmêmes équipées d'un dispositif de récupération des gouttelettes d'eau centrifugées.

L'un des inconvénients d'un tel séparateur est son encombrement et sa masse, qui peuvent être importants, en particulier lorsque des performances élevées de déshumidification sont visées. En outre, le séparateur est en général agencé à la sortie d'un échangeur de chaleur ou d'une turbine. Il est donc nécessaire de relier le séparateur à la sortie de l'échangeur ou à la sortie de la turbine par un conduit d'air qui rend l'intégration volumineuse. Cela impacte les performances globales de l'aéronef, en particulier en termes de consommation de carburant.

En outre, un tel séparateur est susceptible de générer des pertes de charge importantes qui résultent notamment des frottements du flux d'air sur les parois latérales du séparateur. Les inventeurs ont notamment déterminé que les pertes de charges d'un tel séparateur centrifuge peuvent être de l'ordre de 3 fois supérieures à celles observées dans un tuyau de même diamètre et sans hélice. Il s'agit non seulement des pertes de charges liées à la présence de l'hélice, mais également des pertes de charges dans le tuyau en aval de l'hélice. Cette perte de charge est donc peu compatible avec les nouvelles gammes d'avions qui visent à limiter au maximum le prélèvement sur les moteurs de l'aéronef.

Enfin, un tel séparateur nécessite l'assemblage d'un grand nombre de pièces, ce qui complexifie les procédés de fabrication d'un tel séparateur.

En d'autres termes, les séparateurs d'eau actuels souffrent d'un triple inconvénient que constituent son poids, les pertes de charge induites et la complexité de sa fabrication.

Les inventeurs ont donc cherché à proposer un nouveau dispositif d'extraction d'eau qui permet de pallier ce triple inconvénient. EP 2 821 346 A décrit une boucle d'extraction d'eau d'un système de conditionnement d'air d'une cabine d'un véhicule de transport aérien avec un condenseur, un séparateur d'eau, un récupérateur d'eau et une conduit de retour.

### 3. Objectifs de l'invention

L'invention vise à fournir une boucle d'extraction d'eau qui pallie au moins certains des inconvénients des séparateurs connus.

L'invention vise en particulier à fournir, dans au moins un mode de réalisation, une boucle d'extraction d'eau qui présente un poids et un encombrement limités par rapport aux séparateurs connus.

L'invention vise également à fournir, dans au moins un mode de réalisation, une boucle d'extraction d'eau plus perméable que les boucles d'extraction d'eau actuellement disponibles.

L'invention vise également à fournir, dans au moins un mode de réalisation, une boucle d'extraction d'eau dont les coûts de fabrication et d'assemblage sont inférieurs aux coûts de fabrication et d'assemblage des boucles d'extraction d'eau actuellement disponibles.

L'invention vise également à fournir un système de conditionnement d'air équipé d'une boucle d'extraction d'eau selon l'invention.

### 4. Exposé de l'invention

Pour ce faire, l'invention concerne une boucle d'extraction d'eau d'un système de conditionnement d'air d'une cabine d'un véhicule de transport aérien ou ferroviaire comprenant une turbomachine à cycle à air.

Une boucle d'extraction d'eau selon l'invention comprend en outre un condenseur comprenant un premier circuit d'air, dit circuit d'air humide, s'étendant entre une bouche d'entrée d'air humide et une boite de sortie d'air humide, destiné à véhiculer un flux d'air humide chargé en vapeur d'eau, et un deuxième circuit, dit circuit d'air sec, s'étendant entre une entrée d'air sec et une sortie d'air sec, en interaction thermique avec ledit circuit d'air humide et destiné à véhiculer un flux d'air issu d'une turbine de ladite turbomachine à cycle à air pour permettre une condensation dudit flux d'air humide.

Une boucle d'extraction d'eau selon l'invention est caractérisée en ce qu'elle comprend en outre :
- une grille maillée tridimensionnelle logée dans ladite boite de sortie dudit condenseur et configurée pour pouvoir capter les gouttes d'eau dudit flux d'air humide condensé par ledit condenseur,
- un récupérateur d'eau ouvrant sur ladite boite de sortie dudit condenseur et agencé sous ladite grille maillée tridimensionnelle pour pouvoir récupérer par gravitation l'eau collectée par ladite grille maillée tridimensionnelle, ledit récupérateur étant en outre équipé d'un port d'évacuation de l'eau récupérée,
- une conduite de retour d'air reliant ladite boite de sortie dudit condenseur à une interface d'alimentation, directe ou indirecte, de ladite turbine de ladite turbomachine à cycle à air dudit système de conditionnement d'air.

Une boucle d'extraction d'eau selon l'invention présente donc la particularité de mettre en oeuvre une grille maillée tridimensionnelle (aussi désignée par les termes de structure maillée tridimensionnelle), agencée directement dans le boitier de sortie du condenseur (c'est-à-dire dans le compartiment du condenseur agencé immédiatement en aval de la matrice d'échanges thermiques du condenseur) pour assurer la collecte des gouttes d'eau condensées par le condenseur. Le condenseur a pour fonction de refroidir l'air en-dessous de son point de rosée et la grille maillée tridimensionnelle a pour fonction d'extraire et de capter les gouttes d'eau du flux d'air humide condensé par le condenseur. En d'autres termes, l'une des particularités de l'invention est d'intégrer la fonction d'extraction d'eau directement dans le boitier de sortie du condenseur et de remplacer l'extracteur vortex de l'art antérieur par une grille maillée tridimensionnelle. Un condenseur selon l'invention cumule donc la fonction de refroidissement d'un condenseur de l'art antérieur et la fonction d'extraction d'eau d'un séparateur d'eau de l'art antérieur.

Une boucle d'extraction d'eau selon l'invention fait donc l'impasse sur les systèmes centrifuges pour extraire l'eau du flux d'air humide de sorte que le flux d'air, dans une boucle selon l'invention, est peu perturbé par l'extraction d'eau, ce qui réduit sensiblement les pertes de charges par rapport aux boucles d'extraction de l'art antérieur.

En outre, la boucle d'extraction d'eau selon l'invention comprend un récupérateur d'eau agencé sous la grille maillée pour pouvoir récupérer les gouttelettes d'eau captées par la grille de collecte. Ce récupérateur d'eau ouvre sur le boitier de sortie, c'est-à-dire qu'il est également logé sous la grille maillée qui est logée dans le boitier de sortie. Ce récupérateur fait office de zone de tranquillisation et de récupération d'eau en étant agencé sous le boitier de sortie et n'interférant donc pas avec le flux d'air qui circule dans le boitier de sortie vers la conduite de retour. En d'autres termes, la présence du récupérateur d'eau et son agencement permettent de protéger l'eau du flux d'air et de conduire l'eau par gravité naturelle vers le port d'évacuation d'eau.

La boucle d'extraction d'eau selon l'invention présente également une masse et un encombrement réduit par rapport aux boucles de l'art antérieur du fait de l'absence de conduites de circulation d'air entre le condenseur et la conduite de retour et de l'absence de zones de vortex. En particulier, la collecte d'eau est effectuée directement dans la sortie du condenseur. En d'autres termes, la grille maillée tridimensionnelle de collecte d'eau est logée dans le carter du condenseur, ce qui réduit le nombre de pièces à assembler pour former une boucle d'extraction selon l'invention.

Selon l'invention, une conduite de retour d'air relie la boite de sortie du condenseur à une interface d'alimentation, directe ou indirecte, de ladite turbine dudit système de conditionnement d'air. En d'autres termes, la boucle d'extraction d'eau selon l'invention comprend une sortie d'air sec qui est formée d'une interface d'alimentation qui peut être soit reliée directement à la turbine de la turbomachine à cycle à air, soit à un dispositif annexe tel qu'un réchauffeur.

La conduite de retour est de préférence configurée pour d'une part pouvoir minimiser les vitesses du flux d'air et pour d'autre part orienter le flux d'air pour qu'il circule en sens inverse de la gravité.

Une boucle d'extraction d'eau selon l'invention est destinée à équiper un système de conditionnement d'air d'une cabine d'un véhicule de transport aérien ou ferroviaire. Un tel système de conditionnement d'air comprend une turbomachine comprenant au moins un compresseur et une turbine reliés mécaniquement l'un à l'autre. La boucle d'extraction d'eau selon l'invention est avantageusement agencée fluidiquement entre le compresseur et la turbine de détente de sorte que l'air qui circule à travers la grille maillée tridimensionnelle présente une pression absolue comprise, en règle générale, entre 2 et 5 bars. La grille maillée tridimensionnelle de la boucle selon l'invention est donc configurée pour pouvoir capter les gouttes d'eau d'un flux d'air présentant une pression entre 2 et 5 bars, c'est-à-dire une pression supérieure à celle de l'air de distribution dans la cabine qui est en générale comprise entre 0,7 et 1,2 bars.

Avantageusement et selon l'invention, ledit condenseur comprend une matrice d'échanges thermiques configurée pour assurer les échanges thermiques entre ledit circuit d'air humide et ledit circuit d'air sec, et ladite grille maillée tridimensionnelle est logée dans ladite boite de sortie du condenseur à une distance inférieure ou égale à 100mm de ladite matrice d'échanges thermiques dudit condenseur.

Une boucle d'extraction d'eau selon cette variante permet de capter les gouttes d'eau au plus près de la matrice du condenseur et ainsi d'augmenter l'efficacité de l'extraction d'eau.

Les inventeurs ont notamment déterminé que les meilleures performances d'extraction sont obtenues lorsque la grille est agencée au plus près de la matrice d'échanges thermiques du condenseur.

Avantageusement et selon cette variante, ladite boite de sortie du condenseur définit une section de passage d'air du circuit d'air humide et ladite grille maillée tridimensionnelle s'étend sur l'ensemble de cette section de passage d'air.

Une boucle d'extraction d'eau selon cette variante permet de maximiser la zone de collecte d'eau en prévoyant une grille maillée tridimensionnelle qui s'étend sur l'ensemble de la section de passage d'air.

Avantageusement et selon l'invention, la grille maillée tridimensionnelle est agencée dans l'axe dudit circuit d'air humide dudit condenseur.

Selon cette variante la grille maillée tridimensionnelle est dans l'axe du circuit d'air humide du condenseur, c'est-à-dire que la grille est logée sur l'axe de circulation du fluide humide qui s'étend entre la bouche d'entrée d'air humide dans le condenseur et l'entrée de la boite de sortie d'air humide.

Une boucle d'extraction d'eau selon cette variante limite les pertes de charge en supprimant toute déviation d'air entre le condenseur et la grille de captation des gouttes d'eau. En d'autres termes, l'air n'est pas dévié entre l'entrée du condenseur et la grille de captation des gouttes d'eau du flux d'air humide condensé par le condenseur. En revanche, l'air humide peut être dévié par la grille maillée tridimensionnelle, selon la position de la conduite de retour, mais pas en amont de la grille.

Avantageusement et selon l'invention, le port d'évacuation dudit récupérateur d'eau forme un point bas dudit récupérateur.

Cette variante avantageuse facilite l'évacuation d'eau du récupérateur d'eau vers une zone dédiée.

Avantageusement, une boucle d'extraction d'eau selon l'invention comprend un réchauffeur comprenant un premier circuit d'air s'étendant entre une entrée d'air humide et une sortie d'air humide débouchant dans ladite entrée d'air humide dudit condenseur, et un deuxième circuit d'air, en interaction thermique avec ledit premier circuit d'air, et s'étendant entre une entrée d'air sec alimentée par ladite conduite de retour et une sortie d'air sec alimentant ladite entrée de ladite turbine de ladite turbomachine à cycle à air.

Cette variante avantageuse permet d'augmenter la température de l'air qui alimente la turbine de la machine à cycle à air, ce qui permet de vaporiser les éventuelles gouttes d'eau non captées par la grille maillée tridimensionnelle, ce qui protège la turbine, et d'améliorer les performances de la turbine de détente de la turbomachine à cycle à air.

Avantageusement et selon l'invention, ledit condenseur et ledit réchauffeur sont assemblés pour former un seul bloc.

Cette variante permet d'obtenir une boucle d'extraction d'eau compacte qui limite le nombre de pièces nécessaires pour former la boucle.

Il est également possible de prévoir de souder le condenseur et le réchauffeur, voire également la conduite de retour.

Avantageusement et selon l'invention, ladite grille maillée tridimensionnelle est formée à partir d'un ou plusieurs des matériaux suivants : aluminium, acier, alliage métallique, céramique, plastique.

Avantageusement et selon l'invention, ladite grille maillée tridimensionnelle comprend des mailles polyédriques.

Selon cette variante, les mailles peuvent être formées par tous types de polyèdres, notamment des hexaèdres, des dodécaèdres, des tétradécaèdres, etc.

Bien entendu, d'autres formes de mailles peuvent être utilisées pour former une grille maillée tridimensionnelle selon l'invention.

Par exemple, selon une autre variante, la grille maillée peut également être formée par des fils métalliques entrelacés et reliés les uns aux autres. Ces fils métalliques sont par exemple des fils hélicoïdaux entrelacés qui forment au moins trois plans distincts orthogonaux les uns aux autres de sorte que les fils hélicoïdaux entrelacés d'un premier plan entrecroisent les fils hélicoïdaux entrelacés d'au moins un autre plan, de manière à former une grille tridimensionnelle.

La grille maillée tridimensionnelle peut également être formée par une pluralité de grilles bidimensionnelles qui s'étendent chacune dans des plans parallèles les uns aux autres, ou partiellement sécants les uns aux autres, pour formées une structure tridimensionnelle de captation des gouttes d'eau.

Une grille maillée tridimensionnelle d'une boucle d'extraction d'eau selon l'invention peut par exemple résulter d'un procédé de fabrication additive, du type impression 3D. La grille maillée peut, selon une autre variante, être issue d'un procédé de fonderie ou d'un procédé de tissage de fils tressés.

Avantageusement et selon l'invention, ladite grille maillée tridimensionnelle présente une porosité supérieure à 60%, de préférence supérieure à 70%.

L'invention concerne également un système de conditionnement d'air d'une cabine d'un véhicule de transport aérien ou ferroviaire comprenant une turbomachine à cycle à air comprenant un compresseur d'air et une turbine de détente couplée mécaniquement audit compresseur d'air, des échangeurs thermiques configurés pour pouvoir assurer des échanges thermiques entre un air prélevé sur un moteur du véhicule de transport et un air à pression dynamique de manière à pouvoir fournir un air refroidi audit compresseur de ladite turbomachine à cycle à air, et une chambre de mélange alimentée par ladite turbine de détente et adaptée pour pouvoir être reliée à ladite cabine du véhicule à alimenter en air à pression et température contrôlés, caractérisé en ce qu'il comprend en outre une boucle d'extraction d'eau selon l'invention agencée entre lesdits échangeurs thermiques, ladite turbine et ladite chambre de mélange, de manière à pouvoir assécher l'air alimentant la turbine de détente de la turbomachine à cycle à air.

Les avantages et effets techniques d'une boucle d'extraction d'eau selon l'invention s'appliquent *mutatis mutandis* à un système de conditionnement d'air selon l'invention.

L'invention concerne également un véhicule de transport aérien ou ferroviaire comprenant une cabine, caractérisé en ce qu'il comprend en outre un système de conditionnement d'air selon l'invention pour conditionner ladite cabine.

L'invention concerne également une boucle d'extraction d'eau, un système de conditionnement d'air et un aéronef, caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique fonctionnelle d'un système de conditionnement d'air selon un mode de réalisation de l'invention,
- la figure 2 est une vue schématique fonctionnelle d'une boucle d'extraction d'eau selon un mode de réalisation de l'invention,
- la figure 3 est une vue schématique d'une grille de captage d'une boucle d'extraction d'eau selon un mode de réalisation de l'invention,
- la figure 4 est une vue schématique en perspective d'une maille d'une grille maillée tridimensionnelle d'une boucle d'extraction d'eau selon un mode de réalisation de l'invention,
- la figure 5 est une vue schématique en perspective d'une grille maillée tridimensionnelle d'une boucle d'extraction d'eau selon un mode de réalisation de l'invention,
- la figure 6 est une vue schématique de face de la grille maillée de la figure 5,
- la figure 7 est une vue schématique de dessus de la grille maillée de la figure 5.

### 6. Description détaillée d'un mode de réalisation de l'invention

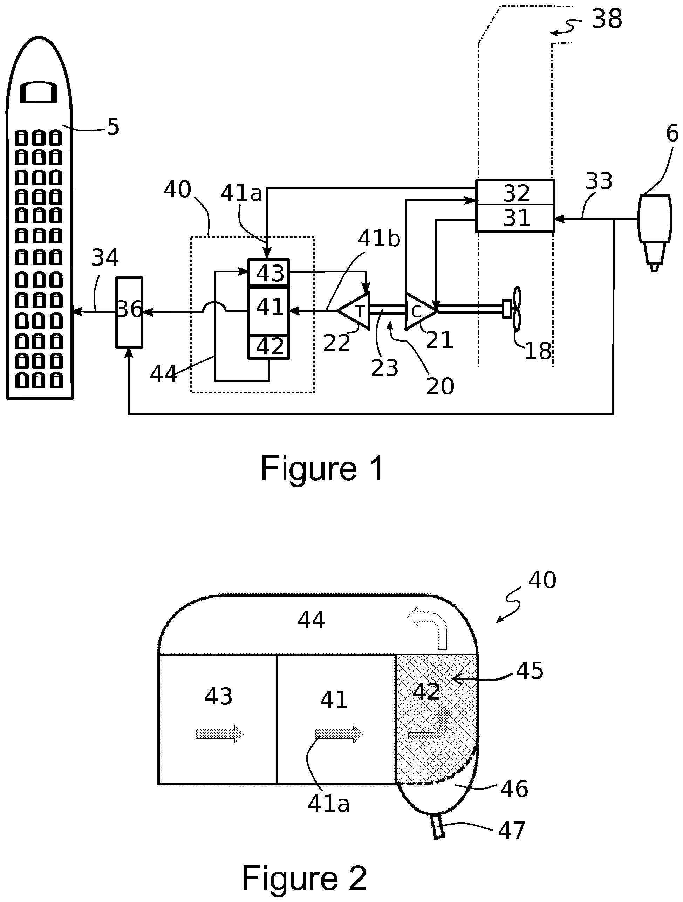

Sur les figures, les échelles et les proportions ne sont pas strictement respectées et ce, à des fins d'illustration et de clarté. Dans toute la description détaillée qui suit en référence aux figures, sauf indication contraire, chaque élément de la boucle d'extraction d'eau est décrit tel qu'il est agencé lorsque la boucle équipe un système de conditionnement d'air tel que représenté schématiquement sur la figure 1.

En outre, les éléments identiques, similaires ou analogues sont désignés par les mêmes références dans toutes les figures.

La figure 1 représente schématiquement un aéronef comprenant une cabine 5 de passagers, et au moins un moteur principal 6. Ce moteur principal 6 dédié à la propulsion de l'aéronef comprend par exemple un compresseur et une turbine non représentés sur la figure 1.

La figure 1 illustre également de manière schématique un système de conditionnement d'air, plus connu sous l'acronyme anglais ECS pour *Environnemental Control System* qui a pour fonction de fournir à la cabine 5 de l'aéronef un air à température et pression contrôlés.

Ce système de conditionnement d'air est formé d'un pack de conditionnement d'air formé d'un ensemble d'organes renfermés dans un carter ou logement et présentant des ports de connexion d'entrée et de sortie d'air et un canal de circulation d'air dynamique, plus connu sous le terme d'air RAM, à travers un ou plusieurs échangeurs thermiques.

Un tel pack peut faire l'objet de nombreuses variantes de réalisation compatible avec une boucle d'extraction d'eau selon l'invention. La figure 1 illustre schématiquement une des variantes possibles de réalisation.

Ainsi, le système de la figure 1 comprend une turbomachine 20 à cycle à air formée d'un compresseur 21 et d'une turbine 22 de détente reliés l'un à l'autre par un arbre rotatif 23. La turbomachine 20 comprend également un ventilateur 18 configuré pour pouvoir assurer la circulation d'un air dynamique, connu sous l'acronyme RAM, à travers d'échangeurs thermiques 31, 32. Selon le mode de réalisation de la figure, le ventilateur 18 est monté sur l'arbre 23 rotatif reliant le compresseur 21 et la turbine 22. Selon un autre mode de réalisation, le ventilateur peut être entraîné en rotation par d'autres moyens, comme par exemple par des moyens électriques.

Le pack de conditionnement d'air est alimenté en air prélevé sur un compresseur du moteur 6 de l'aéronef par l'intermédiaire d'une conduite 33 de prélèvement d'air. La conduite 33 de prélèvement est de préférence équipée d'une vanne pilotée par une logique de commande de manière à pouvoir adapter le débit et/ou la pression d'air fourni au pack en fonction des besoins. Cette vanne n'est pas représentée sur les figures à des fins de clarté.

Le pack de conditionnement d'air alimente la cabine 5 par l'intermédiaire d'une conduite 34 d'entrée de cabine.

Un premier circuit d'un échangeur thermique 32 air/air, plus connu sous la dénomination MHX, est interposé entre la sortie du compresseur 21 et l'entrée de la turbine 22 de manière à pouvoir refroidir l'air comprimé par le compresseur 21 avant son introduction dans l'entrée d'air de la turbine 22. A l'aval de l'échangeur thermique 32, le flux d'air comprimé et refroidi passe dans une boucle d'extraction d'eau 40 selon l'invention et décrite ci-après.

L'air froid détendu à la sortie de la turbine 22 passe à travers le condenseur 41 de la boucle d'extraction d'eau 40 pour y être refroidi avant d'alimenter une chambre de mélange 36. Cette chambre de mélange 36 peut également être alimentée par un air prélevé sur le moteur de l'aéronef, par une commande de vannes de régulation, non représentées sur les figures, agencées sur la conduite reliant le prélèvement d'air sur le moteur de l'aéronef et cette chambre de mélange, avant d'alimenter la cabine par la conduite 34.

L'échangeur thermique 32 comprend également un deuxième circuit traversé par de l'air à pression dynamique en provenance d'au moins une bouche 38 de prélèvement d'air pour le refroidissement de l'air comprimé réchauffé entre le compresseur 21 et la turbine 22.

En outre, un premier circuit d'un échangeur thermique 31 de refroidissement air/air, plus connu sous la dénomination d'échangeur PHX, est interposé entre la conduite 33 délivrant l'air prélevé sur le moteur 6 de l'aéronef et l'entrée d'air du compresseur 21. Le deuxième circuit de cet échangeur thermique 31 est traversé par de l'air à la pression dynamique en provenance de la bouche 38 de prélèvement d'air. Cet échangeur thermique 31 permet ainsi de refroidir l'air entrant dans le pack de conditionnement d'air avant son entrée dans le compresseur 21 de la turbomachine 20 à cycle à air.

La circulation d'air dans les deuxièmes circuits des échangeurs thermiques 31, 32 est assurée par le ventilateur 18.

Chaque échangeur thermique 31, 32 permet un transfert de chaleur entre son premier circuit et son deuxième circuit selon la différence de température des flux d'air traversant respectivement chaque circuit.

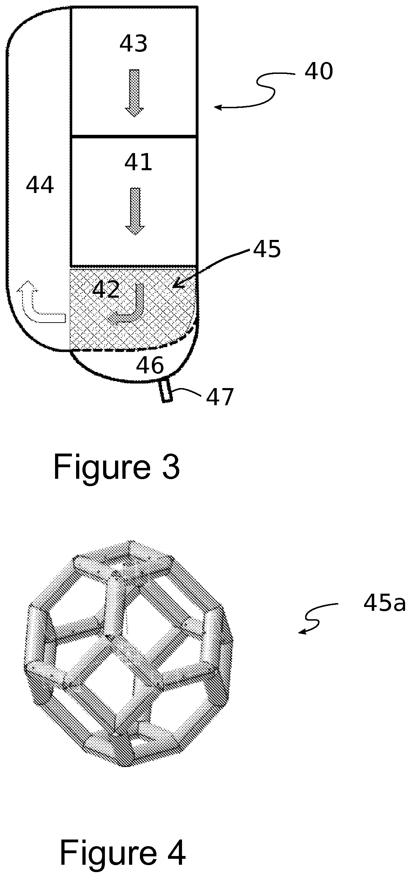

Les figures 2 et 3 illustrent de manière schématique une boucle d'extraction 40 selon deux modes de réalisation de l'invention.

La principale différence entre les deux modes de réalisation concerne l'orientation de la boucle d'extraction. En revanche, le principe de fonctionnement est identique dans chacun des deux modes.

La boucle d'extraction d'eau 40 comprend ainsi un condenseur 41, qui est un échangeur thermique air/air comprenant un premier circuit d'air, dit circuit d'air humide 41a, qui s'étend entre une bouche d'entrée d'air humide et une boite de sortie 42 d'air humide. Ce circuit d'air humide 41a est destiné à véhiculer un flux d'air issu du prélèvement d'air du moteur propulsif 6 de l'aéronef, après refroidissement par l'échangeur thermique 32.

Le condenseur 41 comprend également un deuxième circuit, dit circuit d'air sec 41b, qui s'étend entre une entrée d'air sec et une sortie d'air sec. Ce circuit d'air sec 41b n'est pas représenté sur les figures 2 et 3 dans la mesure où il s'étend perpendiculairement au plan de l'illustration. Le circuit d'air sec 41b est visible sur la figure 1. Ce circuit est destiné à véhiculer l'air issu de la turbine 22 de la turbomachine à cycle à air.

Les circuits 41a et 41b sont en interaction thermique, par exemple par le biais d'une matrice d'échange, qui est par exemple formée par un empilement de plaques métalliques délimitant les deux circuits d'air.

Selon le mode de réalisation des figures, la boucle d'extraction d'eau 40 comprend également un réchauffeur 43 comprenant un premier circuit d'air destiné à véhiculer le flux d'air humide en provenance de l'échangeur thermique 32, qui débouche dans le circuit d'air humide 41a du condenseur, en interaction avec un deuxième circuit d'air 43b, alimenté par une boucle de retour 44 qui véhicule l'air asséché par le condenseur, et destiné à alimenter la turbine 22 de la turbomachine 20.

En outre, la boucle d'extraction d'eau 40 comprend une grille 45 maillée tridimensionnelle logée dans la boite 42 de sortie du condenseur. Cette grille est configurée pour pouvoir capter les gouttes d'eau du flux d'air 41a humide condensé par le condenseur. De préférence, cette grille est logée dans le boitier 42 de sortie à une distance de 50mm de la matrice d'échanges de condenseur 41.

Selon un autre mode de réalisation avantageux, la grille maillée est collée à la matrice d'échanges du condenseur 41 pour améliorer l'efficacité de l'extraction d'eau.

Cette grille 45 maillée peut être de tous types. Elle est par exemple formée de fils métalliques entrelacés et reliés les uns aux autres. Ces fils métalliques sont par exemple des fils hélicoïdaux entrelacés qui forment au moins deux plans distincts orthogonaux les uns aux autres de sorte que les fils hélicoïdaux entrelacés d'un premier plan entrecroisent les fils hélicoïdaux entrelacés d'au moins un autre plan, de manière à former une grille tridimensionnelle.

Selon un autre mode de réalisation, la grille maillée est formée d'une pluralité de mailles cubiques, dodécaèdriques ou tétradécaèdriques.

La figure 4 illustre schématiquement une telle maille 45a tétradécaèdrique.

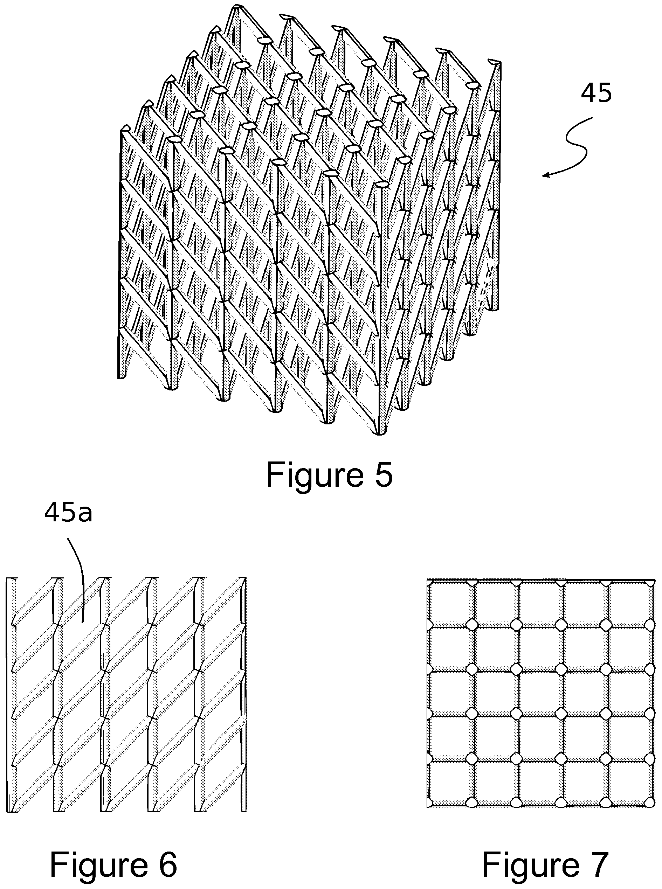

Les figures 5, 6 et 7 illustrent un autre mode de réalisation d'une grille maillée 45 tridimensionnelle. Chaque maille 45a de cette grille est un polyèdre à faces losanges.

La boucle d'extraction d'eau selon l'invention comprend en outre un récupérateur d'eau 46 qui s'ouvre sous la boite 42 de sortie du condenseur en étant agencé sous la grille 45 maillée tridimensionnelle.

Ainsi, le récupérateur d'eau 46 peut récupérer par gravitation l'eau collectée par la grille 45 maillée tridimensionnelle. Le récupérateur est en outre équipé d'un port 47 d'évacuation de l'eau récupérée, qui est de préférence agencé au niveau du point bas du récupérateur d'eau 46.

La boucle d'extraction d'eau 40 comprend également une conduite 44 de retour d'air qui relie la boite 42 de sortie du condenseur au réchauffeur 43.

Selon un autre mode de réalisation, la conduite 44 de retour d'air peut être reliée directement à la turbine 22. Ce mode de réalisation forme alors une boucle d'extraction d'eau dénuée de réchauffeur.

Sur la figure 2, le réchauffeur 23, le condenseur 41 et le boitier de sortie 42 du condenseur sont destinés à être agencés horizontalement et la conduite d'air 44 de retour s'étend au-dessus de ces trois éléments de sorte que le flux circulant dans la conduite de retour 44 soit de direction horizontale de sens opposé au sens de circulation du flux dans le réchauffeur et le condenseur. Sur la figure 3, le réchauffeur 43, le condenseur 41 et le boitier de sortie 42 s'étendent verticalement et la conduite de retour 44 s'étend verticalement de sorte que le flux circulant dans la conduite de retour soit de direction opposée au flux circulant dans le réchauffeur et le condenseur.

L'un des aspects importants de l'invention est l'agencement d'une grille maillée tridimensionnelle de captation des gouttes d'eau directement dans la boite de sortie du condenseur. Cet aspect est particulièrement efficace dans le cadre d'une boucle d'extraction d'eau destinée à équiper un système de conditionnement d'air d'un aéronef. La combinaison de cette caractéristique technique avec la caractéristique technique selon laquelle la boucle comprend un récupérateur d'eau qui ouvre sur le boiter de sortie tout en étant agencé sous la grille maillée pour pouvoir récupérer l'eau par gravitation et former une zone de tranquillisation qui n'interfère pas avec le flux d'air, permet de former une boucle d'extraction d'eau compacte et performante.

Cet aspect pourrait aussi être mis en oeuvre dans un dispositif de refroidissement à cycle diphasique, plus connu sous l'acronyme anglais VCS (pour *Vapor Cooling System*), comprenant un fluide caloporteur diphasique liquide/vapeur entraîné dans une boucle thermique fermée comprenant au moins un compresseur et un évaporateur, la vaporisation du fluide caloporteur entraînant la production d'une puissance froide pour assurer le refroidissement d'équipements embarqués ou le refroidissement d'air cabine. La grille maillée tridimensionnelle pourrait ainsi être agencée en sortie de l'évaporateur.

## Revendications

1. Boucle d'extraction d'eau (40) d'un système de conditionnement d'air d'une cabine (5) d'un véhicule de transport aérien ou ferroviaire comprenant une turbomachine (20) à cycle à air, ladite boucle comprenant :
- un condenseur (41) comprenant un premier circuit d'air, dit circuit d'air humide (41a), s'étendant entre une bouche d'entrée d'air humide et une boite de sortie (42) d'air humide, destiné à véhiculer un flux d'air humide chargé en vapeur d'eau, et un deuxième circuit, dit circuit d'air sec (41b), s'étendant entre une entrée d'air sec et une sortie d'air sec, en interaction thermique avec ledit circuit d'air humide (41a), et destiné à véhiculer un flux d'air issu d'une turbine (22) de ladite turbomachine (20) à cycle à air pour permettre une condensation dudit flux d'air humide,
**caractérisée en ce qu'**elle comprend en outre :
- une grille (45) maillée tridimensionnelle logée dans ladite boite de sortie (42) dudit condenseur, et configurée pour pouvoir capter les gouttes d'eau dudit flux d'air humide condensé par ledit condenseur (41),
- un récupérateur d'eau (46) ouvrant sur ladite boite de sortie (42) dudit condenseur et agencé sous ladite grille (45) maillée tridimensionnelle pour pouvoir récupérer par gravitation l'eau collectée par ladite grille (45) maillée tridimensionnelle, ledit récupérateur d'eau (46) étant en outre équipé d'un port d'évacuation (47) de l'eau récupérée,
- une conduite de retour (44) d'air reliant ladite boite de sortie (42) dudit condenseur à une interface d'alimentation, directe ou indirecte, de ladite turbine (22) de ladite turbomachine (20) dudit système de conditionnement d'air.

2. Boucle d'extraction d'eau selon la revendication 1, **caractérisée en ce que** ledit condenseur (41) comprend une matrice d'échanges thermiques configurée pour assurer les échanges thermiques entre ledit circuit d'air humide (41a) et ledit circuit d'air sec (41b), et **en ce que** ladite grille (45) maillée tridimensionnelle est logée dans ladite boite de sortie (42) du condenseur à une distance inférieure ou égale à 100mm de ladite matrice d'échanges thermiques dudit condenseur.

3. Boucle d'extraction d'eau selon l'une des revendications 1 ou 2, **caractérisée en ce que** ladite boite de sortie (42) du condenseur définit une section de passage d'air du circuit d'air humide et **en ce que** ladite grille (45) maillée tridimensionnelle s'étend sur l'ensemble de cette section de passage d'air.

4. Boucle d'extraction d'eau selon l'une des revendications 1 à 3, **caractérisée en ce que** ladite grille (45) maillée tridimensionnelle est agencée dans l'axe dudit circuit d'air humide dudit condenseur.

5. Boucle d'extraction d'eau selon l'une des revendications 1 à 4, **caractérisée en ce que** ledit port d'évacuation (47) dudit récupérateur (46) forme un point bas dudit récupérateur.

6. Boucle d'extraction d'eau selon l'une des revendications 1 à 5, **caractérisée en ce qu'**elle comprend en outre un réchauffeur (43) comprenant un premier circuit d'air s'étendant entre une entrée d'air humide et une sortie d'air humide débouchant dans ladite entrée d'air humide dudit condenseur, et un deuxième circuit d'air, en interaction thermique avec ledit premier circuit d'air, et s'étendant entre une entrée d'air sec alimentée par ladite conduite de retour (44) et une sortie d'air sec alimentant ladite entrée de ladite turbine (22) de ladite turbomachine (20) à cycle à air.

7. Boucle d'extraction d'eau selon la revendication 6, **caractérisée en ce que** ledit condenseur (41) et ledit réchauffeur (43) sont assemblés pour former un seul bloc.

8. Boucle d'extraction d'eau selon l'une des revendications 1 à 7, **caractérisée en ce que** ladite grille (45) maillée tridimensionnelle est formée à partir d'un ou plusieurs des matériaux suivants : aluminium, acier, alliage métallique, céramique, plastique.

9. Boucle d'extraction d'eau selon l'une des revendications 1 à 8, **caractérisée en ce que** ladite grille (45) maillée tridimensionnelle comprend des mailles polyédriques.

10. Boucle d'extraction d'eau selon l'une des revendications 1 à 9, **caractérisée en ce que** ladite grille (45) maillée tridimensionnelle présente une porosité supérieure à 60%, de préférence supérieure à 70%.

11. Système de conditionnement d'air d'une cabine d'un véhicule de transport aérien ou ferroviaire comprenant une turbomachine (20) à cycle à air comprenant un compresseur d'air (21) et une turbine (22) de détente couplée mécaniquement audit compresseur d'air, des échangeurs thermiques (31, 32) configurés pour pouvoir assurer des échanges thermiques entre un air prélevé sur un moteur (6) du véhicule de transport et un air à pression dynamique de manière à pouvoir fournir un air refroidi audit compresseur (21) de ladite turbomachine (20) à cycle à air, et une chambre (36) de mélange alimentée par ladite turbine (22) de détente et adaptée pour pouvoir être reliée à ladite cabine (5) du véhicule à alimenter en air à pression et température contrôlés, **caractérisé en ce qu'**il comprend en outre une boucle d'extraction d'eau (40) selon l'une des revendications 1 à 10 agencée entre lesdits échangeurs thermiques (31, 32), ladite turbine et ladite chambre (36) de mélange, de manière à pouvoir assécher l'air alimentant la turbine (22) de détente de la turbomachine (20) à cycle à air.

12. Véhicule de transport aérien ou ferroviaire comprenant une cabine (5), **caractérisé en ce qu'**il comprend en outre un système de conditionnement d'air selon la revendication 11 pour conditionner ladite cabine (5).

## Patentansprüche

1. Kreislauf (40) zur Wasserentnahme aus einer Klimaanlage einer Kabine (5) eines Luftoder Schienenfahrzeugs mit einem Luftturbinenmotor (20), worin der Kreislauf umfasst:
- einen Kondensator (41), der einen ersten Luftkreislauf, Feuchtluftkreislauf (41a) genannt, der sich zwischen einer Einlassöffnung für feuchte Luft und einem Auslasskasten für feuchte Luft (42) erstreckt und dazu bestimmt ist, einen mit Wasserdampf beladenen Strom feuchter Luft zu befördern, und einen zweiten Kreislauf umfasst, Trockenluftkreislauf genannt, der sich zwischen einem Einlass für trockene Luft und einem Auslass für trockene Luft (41b) erstreckt, und in thermischer Wechselwirkung mit dem Feuchtluftkreislauf (41a) steht und dazu bestimmt ist, einen von einer Turbine (22) des Luftturbinenmotors (20) kommenden Luftstrom zu befördern, um die Kondensation des Stroms feuchter Luft zu ermöglichen,
**dadurch gekennzeichnet, dass** dieser ferner umfasst:
- ein dreidimensionales Maschengitter (45), das in dem Auslasskasten (42) des Kondensators untergebracht und ausgestaltet ist, dass es die Wassertröpfchen aus dem von dem Kondensator (41) kondensierten Strom feuchter Luft auffangen kann,
- eine Wasserrückgewinnungseinheit (46), die in den Auslasskasten (42) des Kondensators mündet und unter dem dreidimensionalen Maschengitter (45) angeordnet ist, um in der Lage zu sein, das durch das dreidimensionale Maschengitter (45) gesammelte Wasser durch Schwerkraft zurückzugewinnen, wobei die Rückgewinnungseinheit (46) zudem mit einer Auslassöffnung (47) für das zurückgewonnene Wasser versehen ist,
- eine Luftrückführleitung (44), die den Auslasskasten (42) des Kondensators mit einer Versorgungsschnittstelle zur direkten oder indirekten Versorgung der Turbine (22) des Luftturbinenmotors (20) der Klimaanlage verbindet.

2. Wasserentnahmekreislauf nach Anspruch 1, **dadurch gekennzeichnet, dass** der Kondensator (41) eine Wärmeaustauschmatrix umfasst, die ausgestaltet ist, den Wärmeaustausch zwischen dem Feuchtluftkreislauf (41a) und dem Trockenluftkreislauf (41b) zu gewährleisten, und darin dass das dreidimensionale Maschengitter (45) in dem Auslasskasten (42) des Kondensators in einem Abstand von höchstens 100 mm von der Wärmeaustauschmatrix des Kondensators untergebracht ist.

3. Wasserentnahmekreislauf nach Anspruch 1 oder Anspruch 2, **dadurch gekennzeichnet, dass** der Kondensatorauslasskasten (42) einen Luftdurchlassabschnitt des Feuchtluftkreislaufs definiert und darin, dass sich das dreidimensionale Maschengitter (45) über die Gesamtheit dieses Luftdurchlassabschnitts erstreckt.

4. Wasserentnahmekreislauf nach einem der Ansprüche 1 bis 3, **dadurch gekennzeichnet, dass** das dreidimensionale Maschengitter (45) in der Achse des Feuchtluftkreislaufs des Kondensators angeordnet ist.

5. Wasserentnahmekreislauf nach einem der Ansprüche 1 bis 4, **dadurch gekennzeichnet, dass** die Auslassöffnung (47) der Rückgewinnungseinheit (46) einen Tiefpunkt der Rückgewinnungseinheit bildet.

6. Wasserentnahmekreislauf nach einem der Ansprüche 1 bis 5, **dadurch gekennzeichnet, dass** dieser zudem einen Erhitzer (43) umfasst, der einen ersten Luftkreislauf umfasst, der sich zwischen einem Feuchtlufteinlass und einem Feuchtluftauslass erstreckt, und der in den Feuchtlufteinlass des Kondensators mündet, sowie einen zweiten Luftkreislauf umfasst, der in thermischer Wechselwirkung mit dem ersten Luftkreislauf steht und sich zwischen einem Trockenlufteinlass, der von der Rückführleitung (44) versorgt wird, und einem Trockenluftauslass erstreckt, der den Einlass der Turbine (22) des Luftturbinenmotors (20) versorgt.

7. Wasserentnahmekreislauf nach Anspruch 6, **dadurch gekennzeichnet, dass** der Kondensator (41) und der Erhitzer (43) zu einem einzigen Block zusammengefügt sind.

8. Wasserentnahmekreislauf nach einem der Ansprüche 1 bis 7, **dadurch gekennzeichnet, dass** das dreidimensionale Maschengitter (45) aus einem oder mehreren der Materialien gebildet ist: Aluminium, Stahl, einer Metalllegierung, Keramik, und einem Kunststoffmaterial.

9. Wasserentnahmekreislauf nach einem der Ansprüche 1 bis 8, **dadurch gekennzeichnet, dass** das dreidimensionale Maschengitter (45) polyedrische Maschen umfasst.

10. Wasserentnahmekreislauf nach einem der Ansprüche 1 bis 9, **dadurch gekennzeichnet, dass** das dreidimensionale Maschengitter (45) eine Porosität von mehr als 60%, vorzugsweise mehr als 70%, aufweist.

11. Klimatisierungssystem für eine Kabine eines Luft- oder Schienentransportfahrzeugs, welches umfasst: einen Luftturbinenmotor (20) mit einem Luftkompressor (21) und einer mechanisch mit dem Luftkompressor gekoppelten Expansionsturbine (22), Wärmetauscher (31, 32), die ausgestaltet sind, einen Wärmeaustausch zwischen der von einem Motor (6) des Transportfahrzeugs entnommenen Luft und Luft mit dynamischem Druck gewährleisten zu können, um dem Kompressor (21) des Luftturbinenmotors (20) gekühlte Luft zuführen zu können und eine Mischkammer (36), die von der Expansionsturbine (22) gespeist wird und mit der Kabine (5) des Fahrzeugs verbunden werden kann, um mit Luft mit einem geregeltem Druck und einer geregeltem Temperatur versorgt zu werden, **dadurch gekennzeichnet, dass** dieses zudem einen Wasserentnahmekreislauf (40) nach einem der Ansprüche 1 bis 10 umfasst, der zwischen den Wärmetauschern (31, 32), der Turbine und der Mischkammer (36) angeordnet ist, um die Luft, die die Expansionsturbine (22) des Luftturbinenmotors (20) versorgt, trocknen zu können.

12. Luft- oder Schienenfahrzeug mit einer Kabine (5), **dadurch gekennzeichnet, dass** es ferner eine Klimaanlage nach Anspruch 11 zur Klimatisierung der Kabine (5) umfasst.

## Claims

1. Loop (40) for extracting water from an air conditioning system of a cabin (5) of an air or rail transport vehicle comprising an air cycle turbine engine (20), said loop comprising:
- a condenser (41) comprising a first air circuit, called a moist air circuit (41a), extending between a moist air inlet mouth and a moist air outlet box (42), intended to convey a stream of moist air loaded with water vapor, and a second circuit, called a dry air circuit, extending between a dry air inlet and a dry air outlet (41b), in thermal interaction with said moist air circuit (41a) and intended to convey a stream of air coming from a turbine (22) of said air cycle turbine engine (20) to allow condensation of said stream of moist air,
**characterized in that** it further comprises:
- a three-dimensional mesh grid (45) housed in said outlet box (42) of said condenser and configured to be able to capture the water droplets from said stream of moist air condensed by said condenser (41),
- a water recovery unit (46) opening on said outlet box (42) of said condenser and arranged under said three-dimensional mesh grid (45) in order to be able to recover, by force of gravity, the water collected by said three-dimensional mesh grid (45), said recovery unit (46) further being provided with a discharge port (47) for the recovered water,
- an air return pipe (44) linking said outlet box (42) of said condenser to a supply interface for directly or indirectly supplying said turbine (22) of said air cycle turbine engine (20) of said air conditioning system.

2. Water extraction loop according to claim 1, **characterized in that** said condenser (41) comprises a thermal exchange matrix configured to ensure thermal exchanges between said moist air circuit (41a) and said dry air circuit (41b), and **in that** said three-dimensional mesh grid (45) is housed in said outlet box (42) of the condenser at a distance less than or equal to 100 mm from said heat exchange matrix of said condenser.

3. Water extraction loop according to either claim 1 or claim 2, **characterized in that** said condenser outlet box (42) defines an air passage section of the moist air circuit and **in that** said three-dimensional mesh grid (45) extends over the entirety of this air passage section.

4. Water extraction loop according to any of claims 1 to 3, **characterized in that** said three-dimensional mesh grid (45) is arranged in the axis of said moist air circuit of said condenser.

5. Water extraction loop according to any of claims 1 to 4, **characterized in that** said discharge port (47) of said recovery unit (46) forms a low point of said recovery unit.

6. Water extraction loop according to any of claims 1 to 5, **characterized in that** it further comprises a heater (43) comprising a first air circuit extending between a moist air inlet and a moist air outlet, opening into said moist air inlet of said condenser, and a second air circuit, in thermal interaction with said first air circuit, and extending between a dry air inlet supplied by said return pipe (44) and a dry air outlet supplying said inlet of said turbine (22) of said air cycle turbine engine (20).

7. Water extraction loop according to claim 6, **characterized in that** said condenser (41) and said heater (43) are assembled to form a single block.

8. Water extraction loop according to any of claims 1 to 7, **characterized in that** said three-dimensional mesh grid (45) is formed from one or more of the following materials: aluminum, steel, metal alloy, ceramic, plastics material.

9. Water extraction loop according to any of claims 1 to 8, **characterized in that** said three-dimensional mesh grid (45) comprises polyhedral meshes.

10. Water extraction loop according to any of claims 1 to 9, **characterized in that** said three-dimensional mesh grid (45) has a porosity greater than 60%, preferably greater than 70%.

11. Air conditioning system for a cabin of an air or rail transport vehicle comprising an air cycle turbine engine (20) comprising an air compressor (21) and an expansion turbine (22) mechanically coupled to said air compressor, heat exchangers (31, 32) configured to be able to ensure heat exchanges between air taken from an engine (6) of the transport vehicle and air at dynamic pressure so as to be able to supply cooled air to said compressor (21) of said air cycle turbine engine (20), and a mixing chamber (36) supplied by said expansion turbine (22) and adapted to be able to be linked to said cabin (5) of the vehicle to be supplied with air at a controlled pressure and temperature, **characterized in that** it further comprises a water extraction loop (40) according to any of claims 1 to 10 arranged between said heat exchangers (31, 32), said turbine and said mixing chamber (36), so as to be able to dry the air supplying the expansion turbine (22) of the air cycle turbine engine (20).

12. Air or rail transport vehicle comprising a cabin (5), **characterized in that** it further comprises an air conditioning system according to claim 11 for conditioning said cabin (5).
